# EUROPÄISCHE PATENTSCHRIFT

(11) **EP 0 504 653 B1**
(45) Veröffentlichungstag und Bekanntmachung des Hinweises auf die Patenterteilung: **26.10.1994**
(21) Anmeldenummer: 92103631.5
(22) Anmeldetag: 03.03.1992
(51) Int. Cl.: B60H 1/03, B60H 1/00

(54) **Verfahren zur Kühlung von Antriebskomponenten und Heizung eines Fahrgastraumes eines Kraftfahrzeugs, insbesondere eines Elektromobils, und Einrichtung zur Durchführung des Verfahrens**
Process for cooling the drive components as well as heating the passenger compartment of a motor vehicle in particular an electric vehicle and device for performing said process
Méthode pour la réfrigeration des composants de l'entraînement ainsi que pour le chauffage de l'habitacle d'un véhicule automobile en particulier électrique et dispositif pour la mise en oeuvre de la méthode

(30) Priorität: 19.03.1991 DE 4108958
(43) Veröffentlichungstag der Anmeldung: 23.09.1992
(73) Patentinhaber: Behr GmbH & Co., D-70469 Stuttgart (DE); Bayerische Motoren Werke Aktiengesellschaft, 80788 München (DE)
(72) Erfinder: Korcian, Jan, Dr., W-8000 München 83 (DE); Schlenz, Dieter, Dr., W-8081 Kottgeisering (DE); Burk, Roland, Dipl.-Phys., W-7014 Kornwestheim (DE); Heckenberger, Thomas, Dr., W-7022 Leinfelden-Echterdingen (DE); Krauss, Hans-Joachim, W-7000 Stuttgart 80 (DE); Löhle, Michael, Dr., W-7300 Esslingen (DE)
(74) Vertreter: Heumann, Christian

(56) Entgegenhaltungen:
- EP-A- 0 008 384
- DE-A- 2 451 221
- DE-U- 9 001 590
- FR-A- 396 215
- US-A- 2 780 077

## Beschreibung

Die Erfindung bezieht sich auf ein Verfahren zur Kühlung von Antriebskomponenten und zur Heizung eines Fahrgastraumes eines Kraftfahrzeugs, insbesondere eines Elektromobils, und auf eine Einrichtung zur Durchführung des Verfahrens.

Die bisher üblichen Kraftfahrzeuge besitzen einen Verbrennungsmotor, bei dem eine große Menge der zugeführten Energie in Wärme umgesetzt wird, die als Verlustwärme in einem Kühler an die Umgebungsluft abgegeben wird. Die nach einer Warmlaufphase der Brennkraftmaschine zur Verfügung stehende Wärmemenge ist großer als der selbst an kalten Wintertagen benötigte Energiebedarf für die Fahrzeugheizung.

Es sind jedoch bereits alternative Antriebskonzepte vorgeschlagen worden, beispielsweise mittels Elektromotor, dessen Energie von einer Batterieeinheit geliefert wird. Auch bei solchen Antriebssystemen entsteht eine gewisse Verlustwärme im Antriebsmotor, im Getriebe, in der Leistungssteuerung, in der Batterieeinheit und ggf. in weiteren Komponenten. Diese Verlustwärme reicht von der Wärme-menge her für einen Heizbetrieb des Fahrgastraumes in keiner Weise aus, insbesondere nicht bei niedrigen Außentemperaturen.

Zur Kühlung der Antriebskomponenten ist in der DE-U-90 01 590 bereits vorgeschlagen worden, entsprechende Kühlkanäle für ein flüssiges Kühlmittel vorzusehen, so daß das Kühlmittel alle Komponenten mit Wärmeentwicklung durchströmen kann und aus diesen die Wärmeenergie abführt. Die vom Kühlmittel aufgenommene Wärmeenergie wird je nach Betriebsweise der Anlage entweder in einem Kühler oder in einem Heizkörper abgegeben, wobei die jeweilige Betriebsweise durch Ventilmittel einstellbar ist. Bei der bekannten Anordnung sind somit für die Betriebsweise jeweilige separate Wärmetauscher erforderlich und außerdem wird in keiner Weise berücksichtigt, daß das Temperaturprofil sehr starken Schwankungen unterliegt und, zumindest kurzzeitig, auch größere Wärmemengen abzuführen sind. Die in dem Kühlmittelstrom angeordneten Wärmetauscher müssen daher bzgl. Ihrer Wärmeübertragungsleistung auf diesen ungünstigsten Betriebspunkt ausgelegt werden.

In der DE-A-24 51 221 ist eine Heizeinrichtung für ein Elektrofahrzeug beschrieben, bei der zur Beheizung des Fahrgastraumes ein Luftstrom durch einen Bypaßkanal geführt, in welchem sich eine elektrische Regeleinrichtung und ein Elektromotor befinden. Die Verlustwärme dieser Geräte wird von dem Luftstrom aufgenommen und dem Fahrgastraum zugeführt. Bedarfsweise kann der Bypaß auf Kühlbetrieb umgestellt werden, so daß der Zuluftstrom für den Fahrgastraum vom Kühlluftstrom der elektrischen Komponenten entkoppelt ist.

Es ist daher die Aufgabe der vorliegenden Erfindung ein Verfahren zur Kühlung von Antriebskomponenten und zur Heizung eines Fahrgastraumes eines Kraftfahrzeugs zu schaffen, bei dem die vorhandenen Energiequellen in exergetischer Hinsicht optimal genutzt und dabei die Kühlung der Antriebskomponenten unter Berücksichtigung aller möglicher Klimabedingungen sichergestellt wird. Es ist außerdem die Aufgabe der Erfindung, eine Einrichtung zur Durchführung dieses Verfahrens zu schaffen.

Ausgehend von einem Verfahren der im Oberbegriff des Anpruchs 1 angegebenen Gattung, wird die genannte Aufgabe erfindungsgemäß dadurch gelöst, daß die durch die Betriebswechsel (anfahren, bremsen, stehen, beschleunigen usw.) bedingten Temperaturänderungen in den zu kühlenden Komponenten mittels eines in den Kühlkreislauf eingebundenen Wärmespeichers kompensiert werden. Die Vorteile der Erfindung werden im wesentlichen darin gesehen, daß bezüglich der Abwärme der Antriebskomponenten und der vorhandenen Wärme im Fahrgastraum eine günstige thermische Wirkung erreicht wird.

Eine bevorzugte Weiterbildung des erfindungsgemäßen Verfahrens besteht darin, daß der aus dem Fahrgastraum abgeführte Luftstrom einen Anteil Fortluft und einen Anteil Umluft umfaßt, daß dem Umluftstrom ein der Fortluft entsprechender komplementärer Anteil Frischluft beigegeben wird, und der Fortluftstrom oder der Umluftstrom durch einen Wärmetauscher für das Kühlmittel des Antriebsmotors geleitet wird, und daß der aus dem Wärmetauscher austretende Luftstrom als Heizluft für den Fahrgastraum in diesen zurückgeführt wird. Der wesentliche Vorteil dieses Verfahrens besteht darin, daß die Wärme der im Fahrgastraum befindlichen Luft in sinnvoller Weise zurückgewonnen wird, so daß lediglich ein unvermeidbarer Wärmeverlust durch die in dem Fahrzeug vorhandenen Wärmequellen wieder kompensiert werden muß und außerdem für jeden beliebigen Betriebszustand zwischen max. Kühlen der Antriebskomponenten und Heizen des Fahrgastraumes lediglich ein einziger Wärmetauscher im Kühlkreislauf erforderlich ist.

Die vorstehend genannte Aufgabe bzgl. der Schaffung einer Einrichtung zum Kühlen eines Antriebsmotors und zum Heizen eines Fahrgastraumes eines Fahrzeugs der im Oberbegriff des Anspruchs 5 angegebenen Gattung wird erfindungsgemäß dadurch gelöst, daß eingemeinsamer Wärmetauscher zum Heizen des Fahrgastraumes und zum Kühlen der Antriebskomponenten vorgesehen und in dem Kühlmittelkreislauf stromauf des Wärmetauschers ein Wärmespeicher angeordnet ist. Bei besonders niedrigen Temperaturen der Umgebungsluft sollte möglichst keine Wärmeenergie mit dem Fortluftstrom an die Umgebungsluft abgegeben werden. Es ist daher zweckmäßig, daß ein Wärmetauscher vorhanden ist, in dem die dem Fortluftstrom entzogene Wärmeenergie an den Frischluftstrom abgegeben wird.

Ausführungsbeispiele des Erfindungsgegenstandes sind nachstehend anhand der Zeichnung näher erläutert:

In der Zeichnung zeigt:
- **Fig. 1**: die schematische Darstellung einer kombinierten Motorkühlungs- und Fahrgastraum-Heizungsanlage für ein Elektrofahrzeug;
- **Fig. 2**: eine Ausführungsvariante zu Fig. 1 in Kombination mit einer Kompressionskälteanlage;

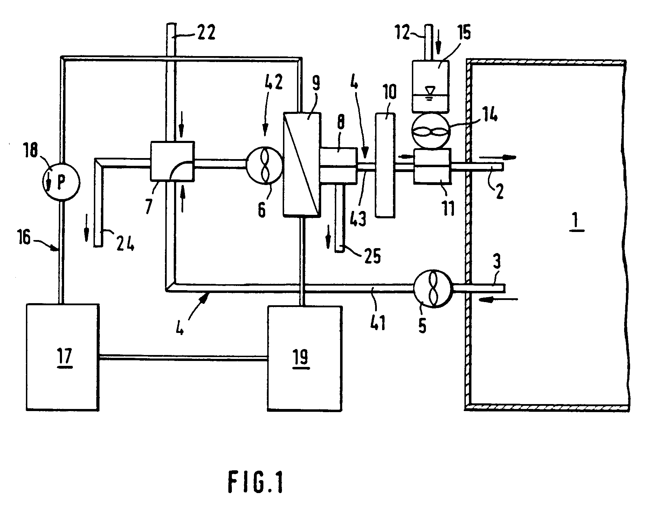

In **Fig. 1** ist mit dem Bezugszeichen 1 ein Fahrgastraum eines Elektrofahrzeugs bezeichnet, in dem eine Zuluftöffnung 2 und eine Abströmöffnung 3 vorgesehen sind. Die Abströmöffnung 3 bildet den Anfang eines Luftführungskanals 4, welcher an der Zuluftöffnung 2 mündet und im wesentlichen 3 Abschnitte 41, 42 und 43 umfaßt. Der erste Abschnitt 41 des Luftführungskanals 4 erstreckt sich bis zu einem ersten Luftstromsteuerelement 7 und in diesem Abschnitt 41 befindet sich ein Gebläse 5. Der zweite Abschnitt 42 des Luftführungskanals 4 beginnt bei dem ersten Luftstromsteuerelement 7 und erstreckt sich bis zu einem zweiten Luftstromsteuerelement 8, wobei in diesem zweiten Abschnitt 42 ein Gebläse 6 und ein Kühler 9 zur Kühlung des Antriebsaggregates 17 angeordnet sind.

Von dem zweiten Luftstromsteuerelement 8 erstreckt sich der dritte Abschnitt 43 des Luftführungskanals 4 bis zu der Zuluftöffnung 2 am Fahrgastraum 1. Dieser dritte Abschnitt 43 führt durch eine Wärmequelle 10 zu einer Luftmischkammer 11, die unmittelbar oder nahe vor der Zuluftöffnung 2 angeordnet ist. In die Luftmischkammer 11 mündet eine Kaltluftleitung 12, durch die ein Anteil von Kalt- bzw. Frischluft dem in dem Abschnitt 43 geführten Luftstrom beigemischt wird. Zur Bereitstellung der erforderlichen Frischluft bzw. Kaltluftmenge ist in der Kaltluftleitung 12 ein Gebläse 14 vorgesehen. Zur Abkühlung der Luft in der Kaltluftleitung 12 ist gemäß Fig. 1 ein Verdunstungskühler 15 angeordnet.

Der vom Luftstrom im zweiten Abschnitt 42 des Luftführungskanals 4 durchströmte Kühler 9 wird auf der anderen Seite der Wärmetauschwände vom Kühlmittel eines Kühlkreislaufs 16 für das Antriebsaggregat 17 des Elektrofahrzeugs beaufschlagt. Dabei dient das Kühlmittel des Kühlkreislaufs 16 nicht nur zur Kühlung des Antriebsmotors selbst, sondern unter Antrieb sei hier die Gesamtanordnung aus Motor, Getriebe, Leistungssteuerung und Batterieeinheit zu verstehen. In dem Kühlkreislauf 16 befindet sich eine Kühlmittelpumpe 18 zur Bewegung des Kühlmittels. Wegen der enormen Schwankungen der Wärmeentwicklung in den Komponenten des Antriebs 17 ist ein puffernder Wärmespeicher 19 vorgesehen, durch den die Temperaturschwankungen gedämpft werden und somit die dem Kühler 9 zugeführte Wärme auf einem innerhalb bestimmter Grenzen relativ konstant gehaltenen Niveau bleibt. Zu dem ersten Luftstromsteuerelement 7 führt ein Frischluftkanal 22 und außerdem ist an das Luftstromsteuerelement 7 eine Ausblasöffnung 24 angeschlossen.

Das zweite Luftstromsteuerelement 8 besitzt neben der Ausgangsöffnung für den dritten Abschnitt 43 des Luftführungskanals 4 einen zweiten Ausgang für einen Fortluftkanal 25, durch den die nicht zum Fahrgastraum 1 zurückgeführte Luft in die Umgebungsluft abgegeben wird.

Der Heizbetrieb für den Fahrgastraum ist von mehreren Einflüssen abhängig, vorrangig jedoch von den Umgebungstemperaturen, von der Sonneneinstrahlung und von der Innenraumtemperatur im Fahrgastraum. Daher ist die Funktion "Heizen" und die benötigte Wärmemenge bedarfsabhängig einzustellen, wohingegen die Kühlung des Antriebs im Fahrbetrieb des Elektrofahrzeugs stets benötigt wird, wenn auch der Kühlleistungsbedarf gewissen Schwankungen unterworfen ist, die beispielsweise klimatisch oder durch das Leistungsprofil bestimmt sind.

Die Kühlung des Antriebs erfolgt dadurch, daß das Kühlmittel durch entsprechende Kühlkanäle des Motors, des Getriebes, der Batterie (ggf. mit einem Zwischenwärmeträgerkreislauf) und der Leistungssteuerung fließt, wobei das Kühlmittel im Kühlkreislauf 16 mit Hilfe der Kühlmittelpumpe 18 bewegt wird. Die Wärmeerzeugung und die somit abzuführende Wärmemenge unterliegen extremen Schwankungen, insbesondere bei Lastwechseln wie Beschleunigung, Abbremsung usw. Damit der Kühler 9 bzgl. seiner Abmessungen nicht unnötig groß ausgeführt werden muß, besitzt der Wärmespeicher 19 die Funktion eines thermischen Puffers, der in der Lage ist, die häufig nur kurzzeitig auftretenden Wärmemengen aufzunehmen und das Kühlmittel mit einem relativ konstanten Temperaturniveau dem Kühler 9 zuzuführen. Die im Kühlmittel enthaltene Wärme wird in dem Kühler 9 an die durch den zweiten Abschnitt 42 des Luftführungskanals 4 strömende Luft abgegeben.

Wird das Fahrzeug bei Außentemperaturen betrieben, die eine Heizung des Fahrgastraums 1 nicht erforderlich machen, so wird der zur Wärmeaufnahme im Kühler 9 erforderliche Luftstrom, der durch das Gebläse 6 erzeugt wird, mindestens annähernd vollständig durch den Frischluftkanal 22 angesaugt und durch den Kühler zu dem zweiten Luftstromsteuerelement 8 geblasen. Da kein Heizungsbedarf für den Fahrgastraum 1 besteht, befindet sich das zweite Luftstromsteuerelement 8 in einer Stellung, die das gesamte durch den Kühler 9 geblasene Luftvolumen durch den Fortluftkanal 25 ins Freie leitet.

Wegen des von den Fahrzeuginsassen benötigten Sauerstoffs muß ein gewisses Luftvolumen im Fahrgastraum ständig erneuert werden. Zu diesem Zweck erzeugt das Gebläse 14 einen Luftstrom in der Kaltluftleitung 12, wobei, je nach Bedarf, die Temperatur der Frischluft in dem Verdunstungskühler 15 abgesenkt werden kann. Diese kalte Luft wird dann durch die Luftmischkammer 11 und die Zuluftöffnung 2 in den Fahrgastraum 1 geleitet. Das gleiche Luftvolumen wird an anderer Stelle aus dem Fahrgastraum, nämlich an der Abströmöffnung 3, abgezogen und mittels des Gebläses 5 durch den ersten Abschnitt 41 des Luftführungskanal 4 transportiert und dann durch die Ausblasöffnung 24 an die Umgebungsluft abgegeben.

Besteht ein Heizungsbedarf für den Fahrgastraum 1, so wird zunächst Einfluß auf das zweite Luftstromsteuerelement 8 genommen, welches die in dem Kühler 9 erwärmte Luft teilweise oder vollständig durch den dritten Abschnitt 43 des Luftführungskanals 4 der Zuluftöffnung 2 des Fahrgastraums 1 zuleitet.

Dieser dem Fahrgastraum 1 entzogene Luftstromanteil hat ein wesentlich höheres Temperaturniveau als beispielsweise die Umgebungsluft an kalten Wintertagen, so daß die Aufheizung des Luftstroms im Kühler 9 von einem bedeutend höheren Temperaturniveau aus erfolgt, was eine entsprechende Differenz zwischen den Temperaturen der an der Abströmöffnung 3 abgesaugten und der an der Zuluftöffnung 2 eingeblasenen Luft ermöglicht. In solchen Fällen mit extremem Heizungsbedarf ist selbstverständlich der Kaltluftkanal 12 verschlossen.

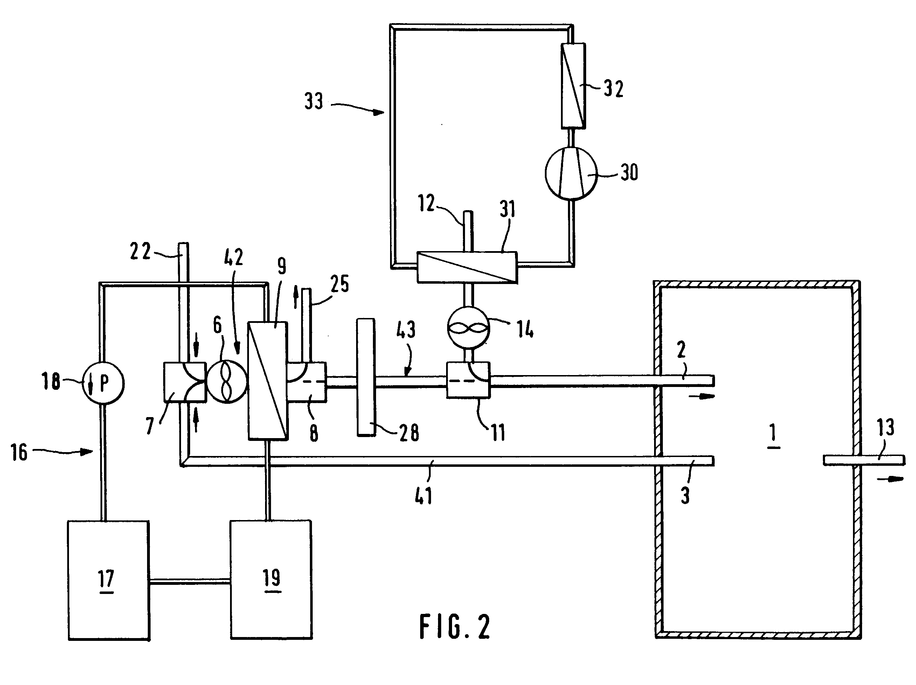

In **Fig. 2** ist eine Ausführungsvariante zur Fig. 1 gezeigt, bei der mehrere Komponenten mit denjenigen der Fig. 1 übereinstimmen. Für gleiche Teile wurden daher die Bezugszeichen der Fig. 1 übernommen. In der Ausführung gemäß Fig. 2 ist kein Gebläse 5 vorgesehen, da das Gebläse 6 zur Absaugung des Luftvolumens aus dem Fahrgastraum 1 ausreicht. Zusätzlich zur Abströmöffnung 3 ist eine Fortluftöffnung 13 vorgesehen, durch die Luft aus dem Fahrgastraum direkt an die Umgebung abgegeben werden kann.

In dem dritten Abschnitt 43 des Luftführungskanals 4 ist eine elektrische Zusatzheizung 28 vorgesehen. Zwischen letzterer und der Zuluftöffnung 2 ist die Lutfmischkammer 11 angeordnet, in welche die Kaltluftleitung 12 mit dem darin vorgesehenen Gebläse 14 mündet. In der Kaltluftleitung 12 befindet sich außerdem ein Verdampfer 31 eines Kältemittelkreislaufs 33, der ferner einen Kompressor 30 und einen Kondensator 32 umfaßt.

Bzgl. der reinen Antriebskühlung ist die Wirkungsweise der Anordnung gemäß Fig. 2 identisch mit derjenigen, wie sie zu Fig. 1 beschrieben wurde. Auch bzgl. der Heizung des Fahrgastraums 1 ist die Funktion des in Fig. 2 gezeigten Ausführungsbeispiels ähnlich, allerdings kann dabei die Wärmeenergie der an der Abströmöffnung 3 abgesaugten Luft nur dadurch dem Prozeß wieder zugeführt werden, daß zumindest ein Teil dieses Luftstroms mittels des ersten Luftstromsteuerelementes 7 von dem ersten Abschnitt 41 zum zweiten Abschnitt 42 geleitet wird. Bei höherem Heizungsbdearf kann das Temperaturniveau durch die elektrische Zusatzheizung 28 weiter angehoben werden, wovon jedoch nur in Ausnahmefällen Gebrauch gemacht werden sollte, da die hierzu benötigte elektrische Energie aus der Batterieeinheit entnommen wird.

Bei sommerlichen Temperaturen der Umgebungsluft und/oder bei Sonneneinstrahlung kann der Bedarf bestehen, die dem Fahrgastraum 1 zugeleitete Luft abzukühlen wozu ein Kältemittelkreislauf 33 vorgesehen ist. Der Kältemittelkreislauf umfaßt einen Kompressor 30, einen Kondensator 20 und einen Verdampfer, 31, wobei in letzerem durch die Verdampfung des Kältemittels die Wärmetauschflächen stark abgekühlt werden. Damit wird auch die durch die Kaltluftleitung 12 strömende Luft am Verdampfer 31 gekühlt. Das Gebläse 14 bewegt den Luftstrom durch den Verdampfer 31 saugend und die Luftmischkammer 11 drückend zu der Zuluftöffnung 2.

In beiden Ausführungsbeispielen kann ein zusätzlicher Wärmetauscher vorgesehen werden, durch den die in der Fortluft enthaltene Wärmeenergie dem Fortluftstrom entzogen wird und zur Beheizung der Frischluft dient. Diese Rückgewinnung der Wärme ist insbesondere bei niedrigen Außentemperaturen von Bedeutung, damit die im Fahrzeug vorhandene Wärme nicht als Verlust an die Umgebungsluft abgegeben wird.

## Patentansprüche

1. Verfahren zur Kühlung von Antriebskomponenten und zur Heizung eines Fahrgastraumes eines Kraftfahrzeugs, insbesondere eines Elektromobils, wobei dem Fahrgastraum (1) mittels eines Gebläses ein nach dem Bedarf temperierter Luftvolumenstrom zugeführt und ein entsprechender Luftvolumenstrom aus dem Fahrgastraum (1) abgeführt wird, und bei dem die in den Antriebskomponenten (17) entstehende Wärmeenergie mittels eines Kühlkreislaufs (16) einem Wärmetauscher (9) zugeführt und dort an einen Luftstrom abgegeben wird, **dadurch gekennzeichnet**, daß die infolge der Betriebswechsel auftretenden Temperaturänderungen in den zu kühlenden Komponenten (17) mittels eines in den Kühkreislauf (16) eingebundenen Wärmespeichers (19) zumindest teilweise kompensiert werden.

2. Verfahren nach Anspruch 1, **dadurch gekennzeichnet**, daß dem Heizluftstrom vor dem Eintritt in den Fahrgastraum (1) ein Anteil frischer oder gekühlter Luft beigegeben wird.

3. Verfahren nach einem der vorhergehenden Ansprüche, **dadurch gekennzeichnet**, daß der aus dem Fahrgastraum (1) abgeführte Luftstrom einen Anteil Fortluft und einen Anteil Umluft umfaßt, daß dem Umluftstrom ein der Fortluft entsprechender komplementärer Anteil Frischluft beigegeben wird und der Fortluftstrom oder der Umluftstrom durch einen als Kühler (9) wirkenden Wärmetauscher für das Kühlmittel des Antriebsmotors, des Batterieblocks und gegebenfalls weiterer zu kühlender Elemente geleitet wird, und daß der aus dem Kühler (9) austretende Luftstrom als Heizluft für den Fahrgastraum in diesen zurückführbar ist.

4. Verfahren nach Anspruch 3, **dadurch gekennzeichnet**, daß stromab eines ersten Luftstromsteuerelements (7) dem Umluftstrom ein komplementärer Anteil Frischluft beigegeben und anschließend durch den Kühler (9) für das Kühlmittel der Antriebskomponenten (17) geleitet wird, und daß der aus dem Kühler austretende Luftstrom in einem zweiten Luftstromsteuerlement (8, 38) in einen Anteil Heizluft für den Fahrgastraum (1) und einen Anteil Fortluft geteilt wird.

5. Einrichtung zum Kühlen von Antriebskomponenten und zum Heizen eines Fahrgastraumes (1) eines Fahrzeugs, insbesondere, eines Elektromobils, wobei die Heizeinrichtung einen Luftführungskanal (4) mit mindestens einem Luftstromsteuerelement (7, 8) umfaßt und mit einem Kühlmittelkreislauf (16) für die Antriebsaggregate, in den ein Wärmetauscher geschaltet ist, um die Wärme aus dem Kühlmittelkreislauf (16) abzuführen, **dadurch gekennzeichnet**, daß zum Heizen des Fahrgastraumes (1) und zum Kühlen der Antriebskomponenten (17) ein gemeinsamer Wärmetauscher vorgesehen und in dem Kühlmittelkreislauf stromauf des Wärmetauschers ein Wärmespeicher angeordnet ist.

6. Einrichtung nach Ansprüche 5, **dadurch gekennzeichnet**, daß ein Kältemittelkreislauf (33) mit einem Verdampfer vorgesehen und letzterer in einer Kaltluftleitung (12) angeordnet ist, die von einer Zuluftöffnung (2) des fahrgastraumes (1) in den Luftführungskanal (4) mündet.

7. Einrichtung nach einem der Ansprüche 5 oder 6, **dadurch gekennzeichnet**, daß im Luftführungskanal (4) eine weitere Wärmequelle (10), vorzugsweise eine elektrische Zusatzheizung (28) vorgesehen ist.

8. Einrichtung nach Anspruch 6, **dadurch gekennzeichnet**, daß in der Kaltluftleitung (12) ein weiteres Gebläse (14) vorgesehen ist.

9. Einrichtung nach einem der Ansprüche 5 bis 8, **dadurch gekennzeichnet**, daß ein Wärmetauscher vorhanden ist, in dem die dem Fortluftstrom entzogene Wärmeenergie an den Frischluftstrom abgegeben wird.

## Claims

1. Process for cooling drive components and for heating a passenger compartment of a motor vehicle, in particular an electric vehicle, wherein an air volume flow, tempered as required, is delivered to the passenger compartment (1) by means of a fan, and a corresponding air volume flow is discharged from the passenger compartment (1), and in the case of which the thermal energy produced in the drive components (17) is delivered by a cooling circuit (16) to a heat exchanger (9) and is there released to an air flow, characterised in that the changes in temperature in the components (17) to be cooled occurring as a result of the change of operation, are compensated at least partially by a heat accumulator (19) incorporated in the cooling circuit (16).

2. Process according to Claim 1, characterised in that a portion of fresh or cooled air is added to the hot air flow before entry into the passenger compartment (1).

3. Process according to either of the preceding claims, characterised in that the air flow discharged from the passenger compartment (1) comprises a portion of exhaust air and a portion of circulating air; in that a complementary portion of fresh air corresponding to the exhaust air is added to the circulating air and the exhaust air flow or the circulating air flow is guided through a heat exchanger, operating as a radiator (9), for the coolant for the drive motor, the battery block and possibly further components to be cooled; and in that the air flow emerging from the radiator (9) can be led back to the passenger compartment as heating air therefor.

4. Process according to Claim 3, characterised in that, downstream of a first air flow control element (7) a complementary portion of fresh air is added to the circulating air flow and is subsequently guided through the radiator (9) for the coolant of the drive components (17); and in that the air flow emerging from the radiator is divided in a second air flow control element (8, 38) into a portion of hot air for the passenger compartment (1) and a portion of exhaust air.

5. Device for cooling drive components and for heating a passenger compartment (1) of a motor vehicle, in particular an electric vehicle, wherein the heating device comprises an air guide duct (4) having at least one air flow control element (7, 8) and having a coolant circuit (16) for the drive units, in which a heat exchanger is connected for discharging the heat from the coolant circuit (16), characterised in that a common heat exchanger is provided for heating the passenger compartment (1) and cooling the drive components (17), and a heat accumulator is disposed upstream of the heat exchanger in the coolant circuit.

6. Device according to Claim 5, characterised in that a refrigerant circuit (33) is provided with an evaporator and the latter is disposed in a cold air line (12) which opens into the air guide duct (4) from an air delivery opening (2) in the passenger compartment (1).

7. Device according to either of Claims 5 and 6, characterised in that a further heat source (10), preferably an electric additional heater (28), is provided in the air guide duct (4).

8. Device according to Claim 6, characterised in that a further fan (14) is provided in the cold air line (12).

9. Device according to any one of Claims 5 to 8, characterised in that a heat exchanger is present in which the thermal energy removed from the exhaust air flow is released to the fresh air flow.

## Revendications

1. Procédé pour refroidir des composants d'entraînement et pour chauffer un habitacle d'un véhicule automobile, notamment d'une automobile électrique, selon lequel un courant volumique d'air, éventuellement mis en température, est envoyé à l'habitacle (1) au moyen d'un ventilateur et un courant volumique d'air correspondant est évacué de l'habitacle (1), et selon lequel l'énergie thermique, qui apparaît dans les composants d'entraînement (17), est envoyée à un échangeur de chaleur (9) au moyen d'un circuit de refroidissement (16) et y est délivrée à un courant d'air, caractérisé en ce que les variations de température, qui apparaissent sous l'effet du changement de fonctionnement dans les composants (17) devant être refroidis, sont compensées au moins en partie à l'aide d'un accumulateur de chaleur (19) qui est incorporé dans le circuit de refroidissement (16).

2. Procédé selon la revendication 1, caractérisé en ce qu'une composante d'air frais ou d'air refroidi est introduite dans le courant d'air chaud, en amont de l'entrée dans l'habitacle (1).

3. Procédé selon l'une des revendications précédentes, caractérisé en ce que le courant d'air, qui est évacué hors de l'habitacle (1), comprend une composante formée d'air d'évacuation et une composante formée d'air de recirculation, qu une composante supplémentaire d'air frais, qui correspond à l'air d'évacuation, est ajoutée au courant d'air de recirculation et que le courant d'air d'évacuation ou le courant d'air de recirculation est envoyé dans un échangeur de chaleur, qui agit en tant que radiateur (9), pour le fluide de refroidissement du moteur d'entraînement, du bloc de batterie et éventuellement d'autres éléments devant être refroidis, et que le courant d'air sortant du radiateur (9) peut être renvoyé dans l'habitacle, en tant qu'air de chauffage pour ce dernier.

4. Procédé selon la revendication 3, caractérisé en ce qu'une composante complémentaire formée d'air frais est ajoutée au courant d'air de recirculation, en aval d'un premier élément (7) de commande du courant d'air et ensuite traverse le radiateur (9) prévu pour le fluide de refroidissement des composants d'entraînement (17), et que le courant d'air sortant du radiateur est subdivisé, dans un second élément (8,38) de commande du courant d'air, en une partie constituant de l'air chaud pour l'habitacle (1) et en une partie formant air d'évacuation.

5. Dispositif pour refroidir des composants d'entraînement et chauffer un habitacle (1) d'un véhicule, notamment d'une automobile électrique, dans lequel le dispositif de chauffage comprend un canal d'amenée de guidage d'air (4) comportant au moins un élément (7,8) de commande du courant d'air, et un circuit (16) pour le fluide de refroidissement, pour les unités d'entraînement, et dans lequel est monté un échangeur de chaleur, de manière à évacuer la chaleur hors du circuit (16) du fluide de refroidissement, caractérisé en ce qu'il est prévu un échangeur de chaleur commun servant à chauffer l'habitacle (1) et à refroidir les composants d'entraînement (17) et qu'un accumulateur de chaleur est disposé dans le circuit du fluide de refroidissement, en amont de l'échangeur de chaleur.

6. Procédé selon la revendication 5, caractérisé en ce qu'il est prévu un circuit (33) du fluide de refroidissement contenant un évaporateur et que ce dernier est disposé dans une canalisation d'air froid (12), qui aboutit, à partir d'une ouverture d'amenée d'air (2) de l'habitacle (1), dans le canal (4) de guidage de l'air.

7. Procédé selon l'une des revendications 5 ou 6, caractérisé en ce que dans le canal (4) de guidage de l'air est prévue une autre source de chaleur (10), de préférence un dispositif de chauffage électrique supplémentaire (28).

8. Dispositif suivant la revendication 6, caractérisé en ce qu'un autre ventilateur (14) est prévu dans la canalisation d'air froid (12).

9. Dispositif selon l'une des revendications 5 à 8, caractérisé en ce qu'il est prévu un échangeur de chaleur, dans lequel l'énergie thermique prélevée du courant d'air d'évacuation est délivrée au courant d'air frais.
